# EUROPEAN PATENT SPECIFICATION

(11) **EP 4 177 474 B1**
(45) Date of publication and mention of the grant of the patent: **21.02.2024**
(21) Application number: 21382994.8
(22) Date of filing: 03.11.2021
(51) Int. Cl.: F04D 27/00, B61B 13/10, E21F 1/00, E21F 1/02, G01M 9/02, F04D 19/00

(54) **TEST STATION FOR A FAN AND METHOD FOR TESTING A FAN USING SAID TEST STATION**
PRÜFSTATION FÜR EIN GEBLÄSE UND VERFAHREN ZUM TESTEN EINES LÜFTERS MIT DIESER PRÜFSTATION
STATION DE TEST POUR VENTILATEUR ET PROCÉDÉ DE TEST DE VENTILATEUR UTILISANT LADITE STATION DE TEST

(43) Date of publication of application: 10.05.2023
(73) Proprietor: Talleres Zitrón, S.A., 33211 Gijón (ES)
(72) Inventor: ARIAS ALVAREZ, Roberto, 33211 GIJON (ES); OTERO FERNANDEZ, José Carlos, 33211 GIJON (ES); GONZALEZ FERNANDEZ, Justo, 33211 GIJON (ES); MENENDEZ GUARDADO, Oliver, 33211 GIJON (ES)
(74) Representative: Del Valle Valiente, Sonia

(56) References cited:
- CN-A- 101 109 672
- CN-A- 103 883 549
- CN-A- 104 198 377
- CN-C- 100 575 909

## Description

### OBJECT OF THE INVENTION

The present invention belongs to the field of auxiliary railway installations, and particularly to the testing of ventilation devices used in railway tunnels.

A first object of the present invention is a new test station designed for simulating the effect on a fan produced by a train passing through a tunnel.

A second object of the present invention is a method for testing a fan using the test station mentioned above.

### PRIOR ART

Two prior art documents relevant to the present invention are CN 101 109 672 A and CN 103 883 549 A.

When a vehicle moves outdoors, the air pushed by the vehicle can move in any direction except towards the ground. However, when the vehicle advances inside a tunnel, the air is confined by the tunnel walls, and therefore the air pushed by the vehicle can only move axially forward within the tunnel. The vehicle also drags an additional volume of air due to the effect of the viscosity. Therefore, a suction effect appears behind the vehicle such that air is absorbed by tunnel through the entrance end of the tunnel. On the contrary, in front of the vehicle a high pressure appears causing the air to be expelled through the exit end of the tunnel. The effect of the displacement of the vehicle through the tunnel is analogous to that of a piston within a cylinder in a compressor. For this reason, this effect is commonly known as "piston effect".

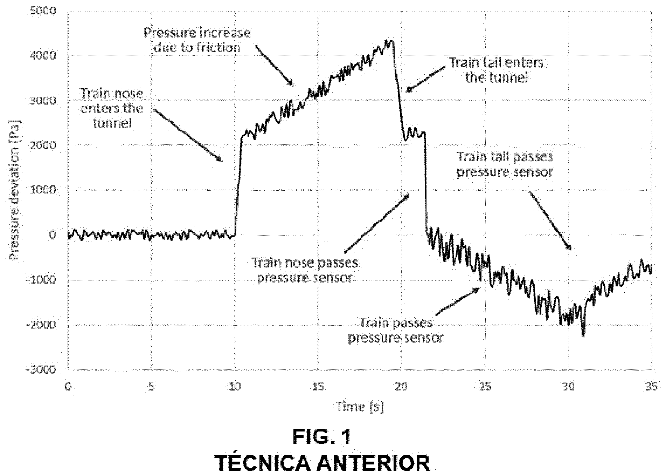

In extreme cases, e.g. when high speed trains pass through relatively narrow tunnels, the piston effect may negatively affect the ventilation devices installed in the tunnels. Fig. 1 shows a graph showing the pressure deviation in a reference position inside the tunnel, e.g. the place where a particular ventilation fan is installed, as the train passes through the tunnel. Starting from an initial zero deviation, there is a first sudden increase in pressure when the nose of the train enters the tunnel. From that moment on, the pressure gradually increases as the rest of the train enters the tunnel due to the effect of the air dragged by friction, the maximum pressure taking place when the tail of the train enters the tunnel. The pressure then experiences a first sudden fall and remains constant until the nose of the train passes the reference position. At that moment, the pressure experiences a second sudden fall until it reaches essentially the initial pressure corresponding to a zero deviation. The pressure then gradually decreases under the initial pressure as the body of the train passes the reference position, the lowest pressure taking place when the tail of the train passes the reference position. A third sudden change in the pressure then takes place when the pressure rises back to the initial pressure where the deviation is again zero.

In view of these sudden pressure variations, ventilation fans installed in railway tunnels must comply with a number of technical requirements. Nowadays, the technical requirements merely comprise testing the capability of the ventilation fans to withstand the maximum and minimum pressure values. Thereto, test stations are known comprising a duct to which the ventilation fan to be tested is connected. In particular, the fan to be tested is positioned near an air exit end of the duct. At an air entrance end of the duct, opposite the position where the ventilation fan to be tested is positioned, a damper is installed. The damper can increase or decrease resistance to the flow of air, thereby allowing for the adjustment of the pressure point of the ventilation fan to be tested. The damper may comprise a plurality of rotating slats having a first position where slats are perpendicular to the axial direction such that the duct is completely closed and a second position where the slats are parallel to the axial direction such that the duct is completely open. The test station may also comprise a number of radial fins positioned somewhere between the damper and the ventilation fan to be tested. The fins are intended to ensure that the airflow through the duct is predominantly axial.

When using such a test station, first the ventilation fan to be tested is started at nominal speed. Then, starting from a completely open position where the slats are parallel to the axial direction, the damper placed at the entrance end of the duct is actuated such that the slats rotate to partly close the duct, thereby increasing the resistance to air flow and therefore causing the pressure at the axial fan to increase until a particular pressure that needs to be tested is arrived at. The ventilation fan then operates at said particular pressure for a certain period of time. Once the test is finished, the ventilation fan is stopped and the damper returns to the initial, completely open position.

However, with these known test stations it is not possible to test how the ventilation fans are affected by sudden pressure changes, in particular how they are affected by being repeatedly subjected to these sudden pressure changes.

Therefore, there still a need in the art for a test station allowing for the ventilation fans to be thoroughly tested.

### SUMMARY OF THE INVENTION

The present invention solves the aforementioned problems by means of a particularly designed test station where the pressure at a position where a fan to be tested is provided simulates the effect of the piston effect caused by a passing train inside a real tunnel, as well as by means of a method for testing a fan using said test station.

To simulate certain sudden pressure changes taking place inside a tunnel when a train passes, the test station and the test method disclosed in the present document require certain components to change states very fast. In the present document, the term "*essentially instantaneously*" attempts to define such very fast changes in e.g. the position of the valve. Maximum time needed for these changes to take place are also provided to further disclose this feature.

Similarly, to simulate certain gradual pressure changes taking place inside a tunnel when a train passes, the test station and the test method disclosed in the present document require certain components to change states slowly in comparison to the fast changes mentioned above. In the present document, the term "*gradually*" attempts to define such comparatively slow changes: any particular gradual change takes a time at least one or two orders of magnitude more than any particular sudden change. However note that, in this case, the duration of these periods depends on factors such as the length of the train and the length of the tunnel (as well as on the relationship between them). Therefore, including time ranges in the claims would be unduly restrictive in this case.

In the present document, terms such as "*before"* and "*after"* are to be interpreted according to the direction of the airflow.

### Test station

The test station of the present station is disclosed in independent claim 1, where the preamble includes those components known from the prior art test stations disclosed above. Dependent claims are directed to particularly advantageous embodiments of the test station.

The test station of the invention comprises essentially the following components: a duct, a damper, an auxiliary fan, and a valve. These components are disclosed in detail herein below.

### Duct

The test station comprises a duct through which the airflow drawn by the fan to be tested passes. The duct has a longitudinal axis and comprises an air inlet portion, an air outlet portion, and a middle portion between the air inlet portion and the air outlet portion. The air outlet portion of the duct is configured for the connection of the fan to be tested.

The duct is normally a cylindrical duct that, in the case of a test station for ventilation fans employed in tunnels, has a diameter in the range from 50 cm to 300 cm. The different components disclosed in the present document are connected suitably connected to the duct such that the airflow also passes through them. The connections between the different components and the duct are carried out by conventional means, such by screwing or bolting connection flanges. In the present document, the components disclosed below are naturally connected, or configured to be connected, to the duct of the test station irrespective of the term employed in the relevant disclosure (e.g. provided, placed, situated, and the like)

### Damper

The damper is provided at the inlet end of the air inlet portion of the duct. The damper selectively blocks the inlet of the duct for increasing or decreasing the resistance to an air flow through said duct. As disclosed earlier in the present document, the use of dampers for this purpose is known from conventional prior art stations.

In principle, the damper can be any kind of damper provided that the resistance to airflow can be set to a desired value. For example, according to a particularly preferred embodiment of the invention, the damper comprises a plurality of rotating slats configured to move to any intermediate position between an open position where said slats are parallel to the longitudinal axis of the duct and a closed position where said slats are perpendicular to the longitudinal axis of the duct.

### Auxiliary fan

The auxiliary fan is provided at the air inlet portion of the duct downstream the damper. In particular, the damper may be directly placed at the air inlet of the auxiliary fan, such that the air inlet of the duct as a whole is the air inlet of the damper.

The function of the auxiliary fan is to assist the fan to be tested, i.e. to propel air in the same direction as the fan to be tested, during a period of the test method that simulates the moment when the nose of the train is outside the tunnel but the tail of the train is still inside. During this period, the pressure at the fan to be tested gradually falls below its nominal pressure.

Further, the auxiliary fan is controlled by a regenerative Variable Frequency Drive (VFD) whose rated power is at least 20% larger than the rated power of the auxiliary fan. The auxiliary fan can thereby be operated to stop essentially instantaneously from a predetermined speed to full stop. This sudden stop is necessary for simulating the moment when the tail of the train exits the tunnel, the pressure at the fan to be tested suddenly increasing to nominal speed. Indeed, the use of a regenerative VFD allows for absorbing power from the fan, thus decreasing the time needed to come to a complete stop in comparison with the conventional use of a regular VFD. This effect is further increased by the rated power of the regenerative VFD being larger than the rated power of the fan motor (i.e. the regenerative VFD is oversized with respect to the fan motor). For example, the ratio between the rated powers of the fan motor and the regenerative VFD could be preferably larger than 1.2 (20% larger), more preferably larger than 1.4 (40% larger), and even more preferably larger than 2 (100% larger). Preferably, this configuration allows the auxiliary fan to stop in less than 0.5 seconds, more preferably in less than 0.4 seconds, still more preferably in less than 0.3 seconds, even more preferably in less than 0.2 seconds, more preferably in between 0.05 and 0.15 seconds, and most preferably in less than 0.1 seconds.

### Valve

The valve is provided at the middle portion of the duct between the auxiliary axial fan and the axial fan to be tested. The valve is configured to alternate between an open position where a lumen of the duct is not blocked, a first partially closed position where the lumen of the duct is partially blocked, and a second partially closed position where the lumen of the duct is partially blocked further. More particularly, the valve is configured such that the movement between the open position and the first partially closed position and the movement between the first partially closed position and the second partially closed position take place essentially instantaneously for causing a sudden decrease or increase of the pressure at the axial fan to be tested.

Indeed, to simulate the sudden pressure changes taking place at a ventilation fan when the nose and the tail of the train enter the tunnel and when the nose and the tail of the train pass the position where said ventilation fan is located, the valve needs to move extremely fast from the open position, first partially closed position and second partially closed position. In particularly preferred embodiments of the invention, the movement of the valve between the open position and the first partially closed position and between the first partially closed position and the second partially closed position takes place in less than 0.5 seconds, more preferably in less than 0.4 seconds, more preferably in less than 0.3 seconds, more preferably in less than 0.2 seconds, and even more preferably in between 0.05 and 0.15 seconds. Even more preferably, said movement takes place in less than 0.1 seconds.

In principle, the valve can have any configuration provided the movement between the open position and the closed positions is fast enough. For example, in a particularly preferred embodiment of the invention, the valve is a gate valve comprising two mechanically synchronized sliding gates contained in a plane perpendicular to the longitudinal axis of the duct. The gates being configured to slide horizontally between the open position where the gates are completely outside the lumen of the duct, the first partially closed position where the gates partially block the lumen of the duct, and the second partially closed position where the gates partially block further the lumen of the duct.

More preferably, the gates are attached to a cable guided by guide pulleys to an actuation pulley mechanically attached to a shaft of a geared motor, such that actuation of the geared motor causes the gates to move between the open position and the partially closed positions. Even more preferably, the cable runs horizontally above the gates from an end guide pulley to a pair of direction change guide pulleys, and then vertically downwards at a side of the gates from the two direction change pulleys to respective sides of the actuation pulley. Preferably, the geared motor has a high speed ratio for ensuring fast movement of the gates. The geared motor is preferably controlled by a Variable Frequency Drive.

In still another preferred embodiment, the valve further comprises position detectors for detecting whether the gates are in the open position, in the first partially closed position, or in the second partially closed position.

### Guide fins

Optional guide fins can be provided at the middle portion of the duct in parallel to the longitudinal axis of the duct to guide the airflow axially. The guide fins may be provided at one or more cylindrical duct sections configured to be connected to the middle portion of the duct.

The test station disclosed above is particularly designed to simulate the pressure changes taking place at a ventilation fan installed inside a tunnel when a train passes through said tunnel.

### Method for testing a fan using the test station disclosed above

The testing method is disclosed in independent claim 11. Dependent claims are directed to particularly advantageous embodiments of the testing method.

The method for testing a fan using the test station disclosed above comprises essentially the following steps:
1. Initially, the valve and the damper are in the open positions. Then, the fan to be tested is started to the nominal speed and then the damper is partially closed for bringing the fan to be tested to a nominal operating point. The nominal operating point may be defined by a particular nominal airflow or pressure.
2. Then, the valve is caused to move essentially instantaneously from the open position to the first partially closed position. The pressure at the fan to be tested is thus caused to suddenly increase to a first pressure, where the first pressure is higher than the nominal pressure of the fan. This sudden increase in the pressure at the fan to be tested simulates the moment when the nose of the train enters the tunnel.
3. Thereafter, the valve is caused to gradually move from the first partially closed position to the second partially closed position. The pressure at the fan to be tested then gradually increases until a second pressure is reached, where the second pressure is higher than the first pressure. This gradual increase in the pressure at the fan to be tested simulates the time period when the body of the train is entering the tunnel. The duration of this step depends on the length of the train whose entrance in the tunnel is being simulated.
4. Subsequently, the valve is caused to move essentially instantaneously from the second partially closed position back to the first partially closed position. The pressure at the axial fan to be tested decreases to approximately the first pressure again. This sudden decrease in the pressure at the fan to be tested simulates the moment when the tail of the train enters the tunnel.
5. Then, the valve is maintained in the first partially closed position a delay time period. The pressure at the axial fan to be tested remains at approximately the first pressure. This period of constant pressure at the fan to be tested simulates the time period between the moment when the tail of the train enters the tunnel and the moment when the train nose passes the fan installed in the tunnel.
6. After that, the valve is caused to move essentially instantaneously from the first partially closed position to the open position. The pressure at the fan to be tested is thereby caused to suddenly decrease to approximately the nominal pressure. This sudden decrease in the pressure at the fan to be tested simulates the moment when the nose of the train passes the fan installed in the tunnel.
7. Next, the the auxiliary fan is caused to gradually accelerate from full stop to the predetermined speed. The pressure at the fan to be tested thus gradually decreases to a third pressure, where the third pressure is below the nominal pressure. This gradual decrease in the pressure at the fan to be tested simulates the time period when the body of the train is passing the fan installed in the tunnel.
8. Finally, the auxiliary fan is caused to stop essentially instantaneously. The pressure at the fan to be tested suddenly decreases to approximately the nominal pressure. This sudden decrease in the pressure at the fan to be tested simulates the moment when the tail of the train passes the fan installed in the tunnel.

As disclosed above, there are certain steps where the valve or the auxiliary fan are subject to very fast changes, or "essentially instantaneous" changes. These changes, i.e. the steps of moving the valve from the open position to the first partially closed position, from the second partially closed position to the first partially closed position, and from the first partially closed position to the open position, and the step of stopping the auxiliary fan, preferably take place in less than 0.5 seconds, more preferably in less than 0.4 seconds, more preferably in less than 0.3 seconds, more preferably in less than 0.2 seconds, and more preferably in between 0.05 and 0.15 seconds. In a particularly preferred embodiment, these staps take place in less than 0.1 seconds.

### BRIEF DESCRIPTION OF THE DRAWINGS

Fig. 1 shows a diagram showing the measured pressure at the position of a ventilation fan inside a tunnel as a train passes through the tunnel.
Fig. 2 shows a perspective view of the test station according to an embodiment of the present invention.
Fig. 3 shows a perspective exploded view of the test station according to an embodiment of the present invention.
Fig. 4 shows a perspective view of a valve comprised in the test station according to an embodiment of the present invention.
Fig. 5 shows a partial perspective detailed view of the valve comprised in the test station according to an embodiment of the present invention.
Fig. 6 shows another partial perspective detailed view of the valve comprised in the test station according to an embodiment of the present invention.
Fig. 7 shows still another partial perspective detailed view of the valve comprised in the test station according to an embodiment of the present invention.
Figs. 8A-8F show certain steps of the method for testing a fan according to an embodiment of the present invention.
Fig. 9 shows a diagram showing the measured pressure at the position of the ventilation fan using the test station of the present invention.

### PREFERRED EMBODIMENT OF THE INVENTION

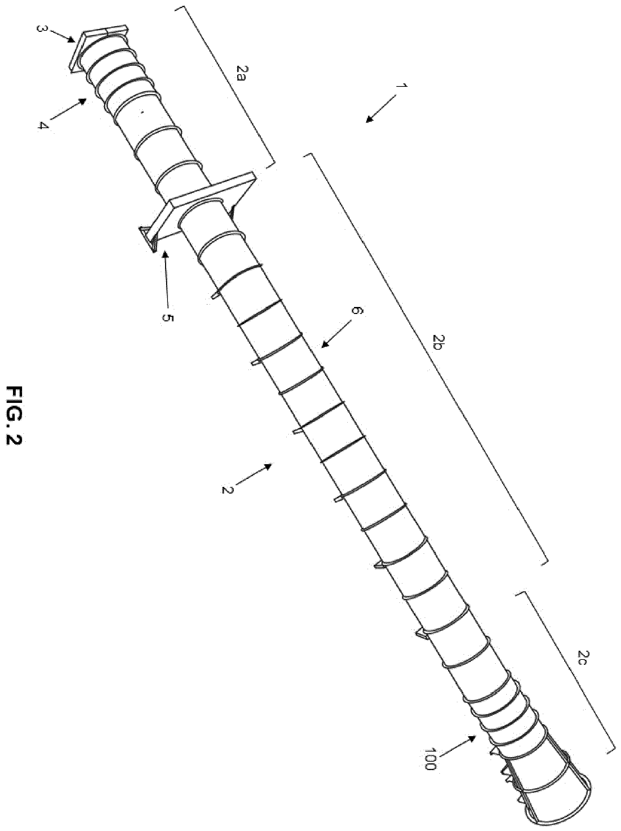

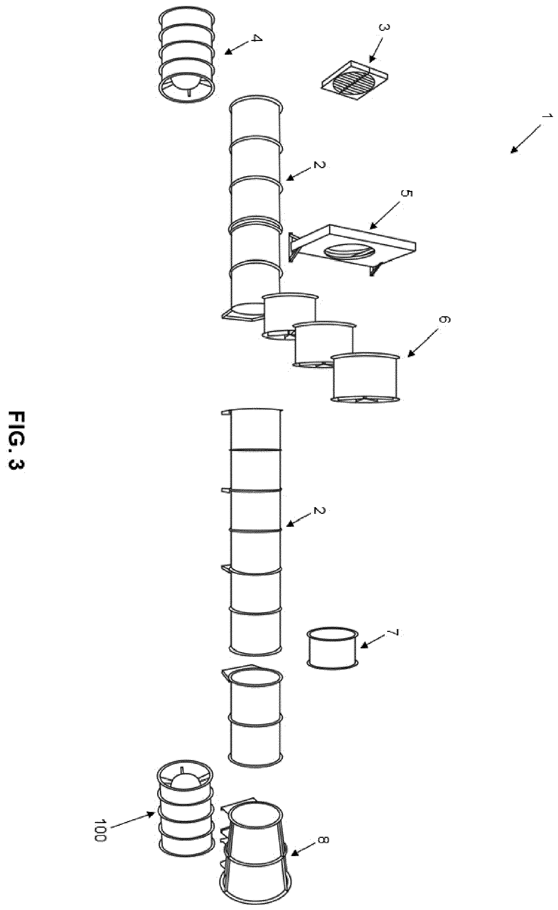

Figs. 2 and 3 show an exemplary embodiment of a test station (1) according to the present invention.

The test station (1) is configured as a straight duct (2) having an air inlet portion (2a), a middle portion (2b) and an air outlet portion (2c). The test station (1) comprises a number of components inserted in the duct. In particular, the following components are connected to the duct (2) from left to right as shown in the figures: a damper (3), an auxiliary fan (4), a gate valve (5), gate fins (6), sensor means (7), a fan (100) to be tested, and a diffuser (8). Duct sections (2) are connected between some of these components to render a closed path for the airflow. The test station (1) has a length of about 30 metres and a diameter of about 2 metres.

The damper (3) provided at the air inlet entrance of the test station (1) comprises a squared frame with a plurality of parallel slats oriented in a horizontal direction. The slats are configured to rotate around their horizontal axis for moving between an open position where all the slats are parallel to the longitudinal direction of the duct and a closed position where all the slats are perpendicular to the longitudinal direction of the duct. The damper (3) can also adopt any intermediate position between the open and the closed positions.

Adjacent the damper (3), still in the air inlet portion (2a) of the duct (2), the auxiliary fan (4) is an axial fan oriented in parallel to the fan (100) to be tested. That is, when in operation, the auxiliary fan (4) propels air in the same direction as the fan (100) to be tested. The auxiliary fan (4) may be the same model as the fan (100) to be tested.

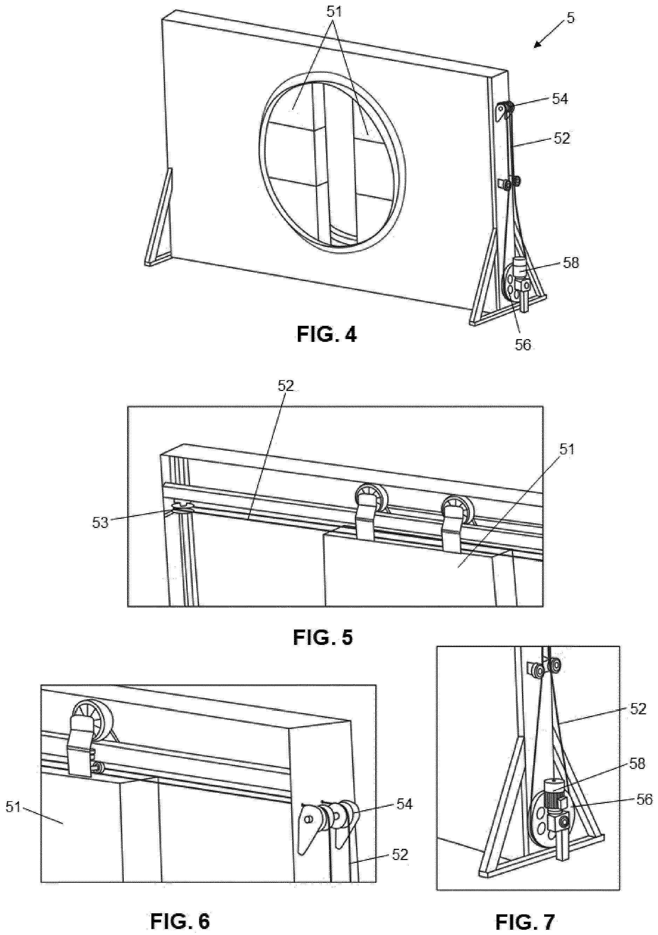

After a number of cylindrical duct sections, at the middle portion (2b) of the duct (2), the gate valve (5) is connected. The gate valve (5), shown in more detail in Figs. 4-7, comprises two mechanically synchronized gates (51) horizontally slidingly connected to an essentially rectangular frame. In particular, the two gates (51) are slidingly supported by an upper beam of the gate valve (5) such that they can slide horizontally. A circular hole is provided at the middle portion of the rectangular frame of the gate valve (5). When the two gates (51) are in the outer end positions, they are situated completely outside said circular hole, thereby allowing air to freely flow through the hole. When the two gates (51) are in the inner positions, an inner side thereof fit one against the other for blocking completely the hole such that essentially no air can flow through the hole.

To move the gates (51), a stainless steel cable (52) is provided. In particular, the cable (52) runs from an actuation pulley (56) placed at the side of the frame, extends vertically from said actuation pulley (56) to a direction change pulley (54), then runs horizontally over the frame to an end guide pulley (53) at the opposite side of the frame, turns back at the end guide pulley (53) to return horizontally to another direction change pulley (54), and finally returns vertically downwards to the actuation pulley (56). The actuation pulley (56) is rotated by means of a dedicated geared motor (58) controlled by a Variable Frequency Drive (VFD). Naturally, the geared motor has a large speed ratio to ensure the movement of the gates (51) is fast enough. The gates (51) are connected to horizontal sections of the cable (52) such that they synchronously open and close, i.e. move horizontally apart or move horizontally one towards the other, when the actuation pulley (56) is rotated by the electric motor (58).

In this particular embodiment, the gate valve (5) is configured for moving between three particular configurations: an open configuration where the gates (51) are outside the hole such that air can freely pass through, a first partially closed configuration where the gates (51) block partially the hole such that air can only pass through a central vertical band of the hole, and a second partially closed configuration where the gates (51) partially block further the hole such that air can only pass through a yet narrower vertical band of the hole. Naturally, the narrower the open rectangular band of the hole through which air must pass through, the greater the pressure drop between the inlet and outlet side of the valve (5).

The gate valve (5) further comprises presence detectors for detecting the position of the gates (51). In particular, the presence detectors indicate if the gates are in the open position, in the first partially closed position, or in the second partially closed position.

After some more cylindrical duct sections, still at the middle portion (2b) of the duct (2), guide fins (6) are provided. The guide fins (6) are embodied as a number of radial plates stemming from the inner surface of a cylindrical section connected to the duct (2). The airflow direction, when disturbed after passing through the rectangular open band of the valve (5), is thereby corrected.

A number of cylindrical duct sections after the guide fins (6), relatively close to the air inlet of the fan (100) to be tested, a sensor means (7) is provided. The sensor means (7) provides the pressure at the air inlet of the fan (100) to be tested. Note that the pressure during the tests experiences several sudden changes. Therefore, to obtain precise measurements, the sensor means is preferably a high speed analogic output pressure transducers.

After still two more cylindrical duct sections, now at the air outlet portion (2c) of the duct (2), the fan (100) to be tested is installed. To obtain useful information, the fan (100) is provided with a number of sensors: power and current sensors; strain gauges for measuring the stress at the blades; accelerometers for measuring the vibrations. Furthermore, additional sensor providing useful information are installed, such as temperature sensors, humidity sensors, and barometric pressure sensors for determining the density of the air within the duct.

After the fan (100) to be tested, a frustoconical diffuser (8) is connected.

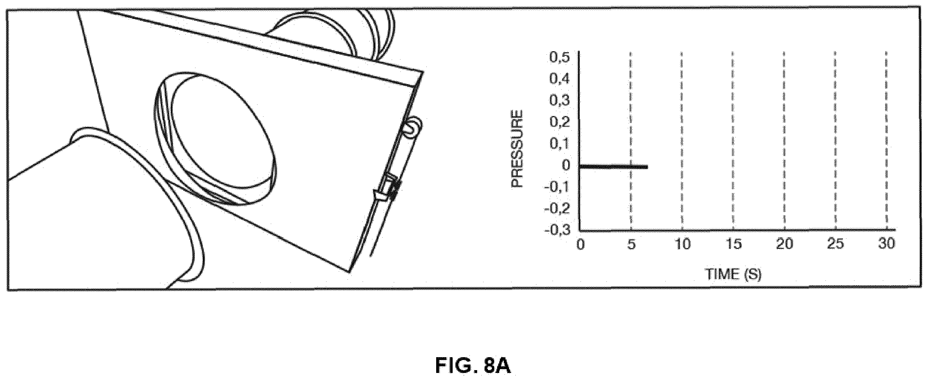

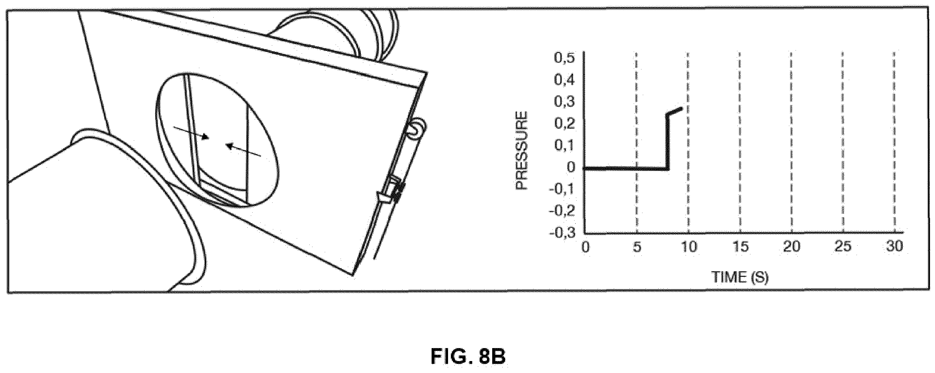

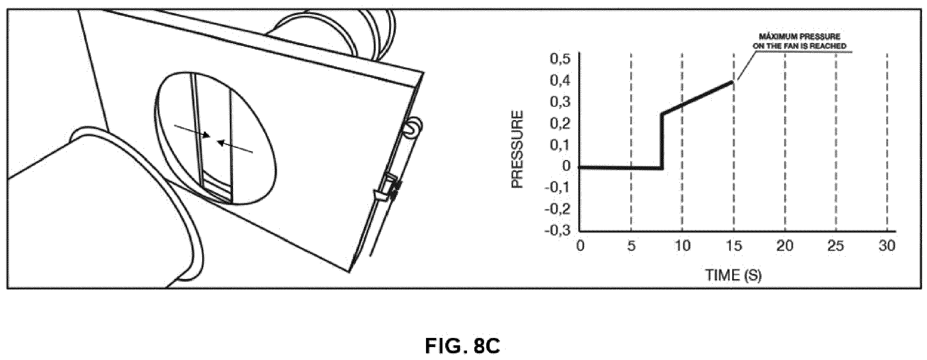

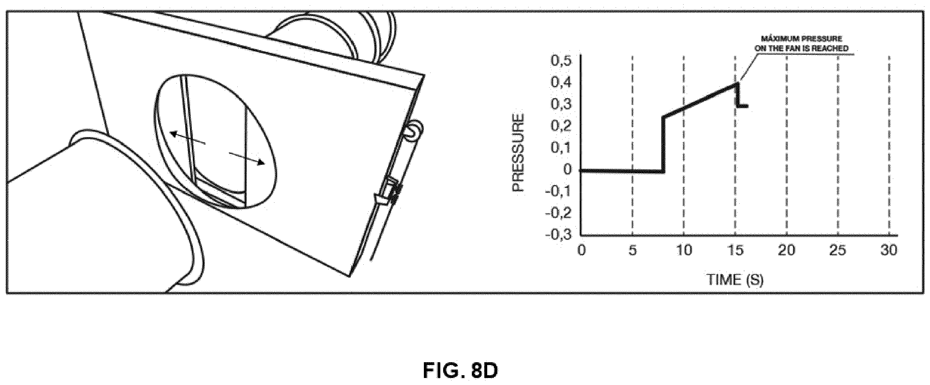

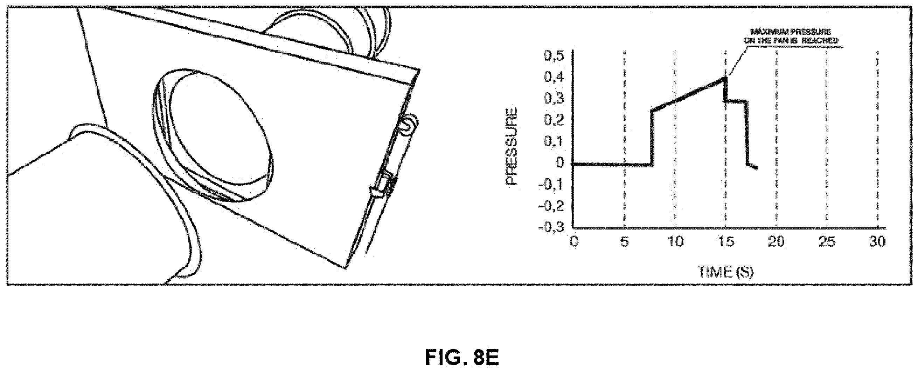

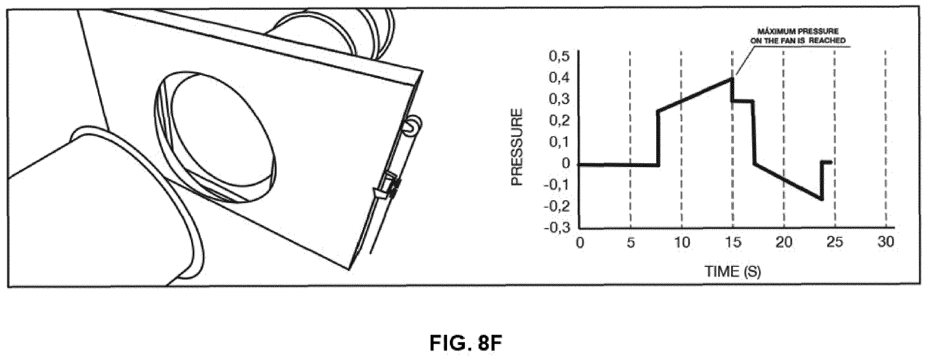

Now, this test station (1) is used for carrying out a simulation of the piston effect caused by a train passing a ventilation fan installed inside a tunnel. The steps of the test method are the following:
1. With the valve (5) and the damper (3) in the open positions, the fan (100) to be tested is taken to the nominal speed. Then, the damper (3) is partially closed for bringing the fan (100) to be tested to a nominal operating point. The nominal operating point is arrived at by measuring the pressure by means of the sensor means (8) while slowly closing the damper (3) until the nominal pressure is arrived at. Fig. 8A shows graphically shows the open position of the valve (5) and a zero pressure deviation at the fan (100) (i.e. the fan (100) is working at nominal pressure).
2. The valve is then switched essentially instantaneously from the open position to the first partially closed position. This movement is carried out as fast as possible, as the event to be simulated, i.e. the entrance of the train nose in the tunnel, is also essentially instantaneous. The electric motor (58) of the gate valve (5) is therefore actuated appropriately to move the gates (51) inwards as fast as possible to partially block the airflow through the valve (5). The time taken to switch the valve (5) from the open position to the first partially closed position is less than 0.2 seconds, more preferably less than 0.1 seconds. The pressure at the fan (100) to be tested measured by the sensor means (58) experiences a sudden increase from the nominal pressure to a first pressure. In the present example, the first pressure is 840 Pa greater than the nominal pressure, where 840 Pa represent about 60% of the total increment. Figs. 8B shows the gates (51) of the valve (5) in the position corresponding to the first partially closed position and the pressure deviation at the fan (100) jumping up vertically to 840 Pa.
3. Then, the valve (5) is caused to gradually move from the first partially closed position to the second partially closed position. During this period, the electric motor (58) is actuated such that the gates (51) slowly close until arriving at the second partially closed position where the pressure at the fan (100) to be tested is the second pressure. Preferably, the closing speed is constant. The time taken to gradually close the valve from the first partially closed position to the second partially closed position is about 5 seconds to 30 seconds, more preferably 5 seconds to 20 seconds, even more preferably from 5 seconds to 15 seconds, and ideally 8 seconds. In this example, the second pressure is 1400 Pa greater than the nominal pressure. Fig. 8C shows the gates (51) of the valve (5) in the position corresponding to the second partially closed position and the pressure deviation at the fan (100) rising linearly to 1400 Pa.
4. Once the second pressure is arrived at, the valve (5) is caused to move essentially instantaneously from the second partially closed position back to the first partially closed position where the pressure at the axial fan (100) to be tested is approximately the first pressure. Again, this step takes less than 0.2 seconds, ideally less than 0.1 seconds. Fig. 8D shows the gates (51) of the valve (5) back in the position corresponding to the first partially closed position and the pressure deviation at the fan (100) dropping down vertically back to 840 Pa.
5. The valve (5) is then maintained the first partially closed position a delay time period of preferably between 1 second and 10 seconds, more preferably between 1 second and 5 seconds, and most preferably of 2 seconds. During that time, that the pressure at the axial fan (100) to be tested remains at approximately the first pressure (i.e. the pressure deviation remains at 840 Pa). Fig. 8D shows the gates (51) of the valve (5) still in the first partially closed position and the pressure deviation at the fan (100) staying at 840 Pa.
6. The valve (5) is then caused to move essentially instantaneously from the first partially closed position to the open position. This step is again carried out as fast as possible, preferably in less than 0.2 seconds, and more preferably in less than 0.1 seconds. At the end of this step, the pressure at the fan (100) to be tested is approximately the nominal pressure. Fig. 8E shows the gates (51) of the valve (5) in the open position and the pressure deviation at the fan (100) dropping down vertically back to zero.
7. The auxiliary fan (4) is then caused to gradually accelerate from full stop to a predetermined speed. To avoid delays and undesired effects, the auxiliary fan (4) may be kept in operation, although at the lowest speed possible, from the beginning of the test, in which case the speed of the auxiliary fan (4) is just increased at this point. The pressure at the fan (100) to be tested gradually decreases from the nominal pressure to a third pressure. Preferably, pressure decrease is linear. In the present example, the third pressure is 900 Pa lower than the nominal pressure. Fig. 8F shows the gates (51) of the valve (5) still in the open position and the pressure deviation at the fan (100) falling linearly to 900 Pa.
8. Finally, the auxiliary fan (4) is caused to stop essentially instantaneously, e.g. in less than 0.2 seconds, more preferably in less than 0.1 seconds. The pressure at the fan (100) to be tested rises up vertically back to the nominal pressure, as shown in Fig. 8F.

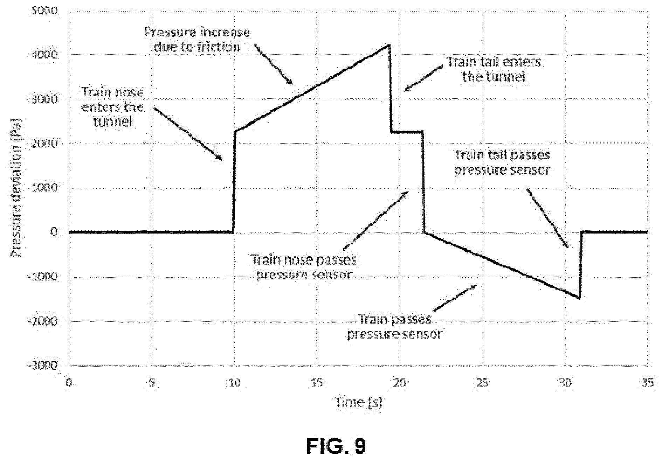

Fig. 9 shows the complete graph showing the pressure measured at the test station (1). A comparison with Fig. 1 shows how the evolution of the pressure obtained using the present test station (1) very closely resembles the real measured pressure at a ventilation fan present in a tunnel when a train passes by.

## Claims

1. Test station (1) for a fan (100), comprising:
- a duct (2) having a longitudinal axis, the duct (2) comprising an air inlet portion (2a), an air outlet portion (2c), and a middle portion (2b) between the air inlet portion (2a) and the air outlet portion (2c); and
- a damper (3) provided at the inlet end of the air inlet portion (2a) of the duct (2), the damper (3) selectively blocking the inlet of the duct (2) for increasing or decreasing the resistance to an air flow through said duct (2);
where the air outlet portion (2c) of the duct (2) is configured for the connection of the fan (100) to be tested, the test station further comprising:
- an auxiliary fan (4) provided at the air inlet portion (2a) of the duct (2) downstream the damper (3), the auxiliary fan (4) being controlled by a regenerative Variable Frequency Drive (VFD) whose rated power is at least 20% larger than the rated power of the auxiliary fan (4), such that the auxiliary fan (4) can be operated to stop essentially instantaneously from a predetermined speed to full stop; and
- a valve (5) provided at the middle portion (2b) of the duct (2) between the auxiliary fan (4) and the fan (100) to be tested, the valve (5) being configured to alternate between an open position where a lumen of the duct (2) is not blocked, a first partially closed position where the lumen of the duct (2) is partially blocked, and a second partially closed position where the lumen of the duct (2) is partially blocked further, such that the movement between the open position and the first partially closed position and the movement between the first partially closed position and the second partially closed position take place essentially instantaneously for causing a sudden decrease or increase of the pressure at the axial fan (100) to be tested.

2. Test station (1) according to claim 1, where the movement of the valve (5) between the open position and the first partially closed position and between the first partially closed position and the second partially closed position takes place in less than 0.5 seconds.

3. Test station (1) according to claim 1, where the movement of the valve (5) between the open position and the first partially closed position and between the first partially closed position and the second partially closed position takes place in less than 0.2 seconds.

4. Test station (1) according to claim 1, where the movement of the valve (5) between the open position and the first partially closed position and between the first partially closed position and the second partially closed position takes place in between 0.05 and 0.15 seconds.

5. Test station (1) according to any of the previous claims, where the valve (5) is a gate valve comprising two mechanically synchronized sliding gates (51) contained in a plane perpendicular to the longitudinal axis of the duct (2), the gates (51) being configured to slide horizontally between the open position where the gates (51) are completely outside the lumen of the duct (2), the first partially closed position where the gates (51) partially block the lumen of the duct (2), and the second partially closed position where the gates (51) partially block further the lumen of the duct (2).

6. Test station according to claim 5, where said gates (51) are attached to a cable (52) guided by guide pulleys (53, 54, 55) to an actuation pulley (56) mechanically attached to a shaft of a geared motor (57), such that actuation of the geared motor (57) causes the gates (51) to move between the open position and the partially closed positions.

7. Test station (1) according to claim 6, where the cable (52) runs horizontally above the gates (51) from an end guide pulley (53) to a pair of direction change guide pulleys (54), and then vertically downwards at a side of the gates (51) from the two direction change pulleys (54) to respective sides of the actuation pulley (56).

8. Test station (1) according to any of the previous claims, where the valve (5) further comprises position detectors for detecting whether the gates (51) are in the open position, in the first partially closed position, or in the second partially closed position.

9. Test station (1) according to any of the previous claims, where the damper (3) comprises a plurality of rotating slats configured to move to any intermediate position between an open position where said slats are parallel to the longitudinal axis of the duct (2) and a closed position where said slats are perpendicular to the longitudinal axis of the duct (2).

10. Test station (1) according to any of the previous claims, further comprising a guide fins (6) provided at the middle portion (2b) of the duct (2), the guide fins (6) being parallel to the longitudinal axis of the duct (2) to guide the airflow axially.

11. Method for testing a fan (100) using the test station of any of the previous claims, **characterized by** comprising the following steps:
- with the valve (5) and the damper (3) in the open positions, starting the fan (100) to be tested to the nominal speed and then partially closing the damper (3) for bringing the fan (100) to be tested to a nominal operating point;
- causing the valve (5) to move essentially instantaneously from the open position to the first partially closed position where the pressure at the fan (100) to be tested is a first pressure, where the first pressure is higher than a nominal pressure of the fan (100);
- causing the valve (5) to gradually move from the first partially closed position to the second partially closed position where the pressure at the fan (100) to be tested is a second pressure, where the second pressure is higher than the first pressure;
- causing the valve (5) to move essentially instantaneously from the second partially closed position back to the first partially closed position where the pressure at the axial fan (100) to be tested is approximately the first pressure;
- maintaining the valve (5) in the first partially closed position a delay time period such that the pressure at the axial fan (100) to be tested remains at approximately the first pressure;
- causing the valve (5) to move essentially instantaneously from the first partially closed position to the open position where the pressure at the fan (100) to be tested is approximately the nominal pressure;
- causing the auxiliary fan (4) to gradually accelerate from full stop to the predetermined speed where the pressure at the fan (100) to be tested is a third pressure, where the third pressure is below the nominal pressure; and
- causing the auxiliary fan (4) to stop essentially instantaneously, such that the pressure at the fan (100) to be tested again reaches approximately the nominal pressure.

12. Method for testing a fan (100) according to claim 11, where steps of moving the valve (5) from the open position to the first partially closed position, from the second partially closed position to the first partially closed position, and from the first partially closed position to the open position, and the step of stopping the auxiliary fan (4), take place in less than 0.5 seconds.

13. Method for testing a fan (100) according to claim 12, where steps of moving the valve (5) from the open position to the first partially closed position, from the second partially closed position to the first partially closed position, and from the first partially closed position to the open position, and the step of stopping the auxiliary fan (4), take place in less than 0.2 seconds.

14. Method for testing a fan (100) according to claim 13, where steps of moving the valve (5) from the open position to the first partially closed position, from the second partially closed position to the first partially closed position, and from the first partially closed position to the open position, and the step of stopping the auxiliary fan (4), take place in between 0.05 and 0.15 seconds.

## Patentansprüche

1. Teststation (1) für ein Gebläse (100), die Folgendes umfasst:
- einen Kanal (2) mit einer Längsachse, wobei der Kanal (2) einen Lufteinlassabschnitt (2a), einen Luftauslassabschnitt (2c) und einen Mittenabschnitt (2b) zwischen dem Lufteinlassabschnitt (2a) und dem Luftauslassabschnitt (2c) umfasst; und
- einen Dämpfer (3), der am Einlassende des Lufteinlassabschnitts (2a) des Kanals (2) bereitgestellt ist, wobei der Dämpfer (3) den Einlass des Kanals (2) zum Erhöhen oder Verringern des Widerstands gegenüber einem Luftstrom durch den Kanal (2) selektiv blockiert;
wobei der Luftauslassabschnitt (2c) des Kanals (2) zur Verbindung des zu testenden Gebläses (100) ausgelegt ist,
wobei die Teststation ferner Folgendes umfasst:
- ein Hilfsgebläse (4), das am Lufteinlassabschnitt (2a) des Kanals (2) stromabwärts vom Dämpfer (3) bereitgestellt ist, wobei das Hilfsgebläse (4) von einem regenerativen Antrieb mit variabler Frequenz (VFD) gesteuert wird, dessen Nennleistung um mindestens 20 % größer ist als die Nennleistung des Hilfsgebläses (4), derart, dass das Hilfsgebläse (4) betrieben werden kann, um von einer vorbestimmten Drehzahl im Wesentlichen sofort zu einem vollständigen Stillstand gestoppt zu werden; und
- ein Ventil (5), das im Mittenabschnitt (2b) des Kanals (2) zwischen dem Hilfsgebläse (4) und dem zu testenden Gebläse (100) bereitgestellt ist, wobei das Ventil (5) dazu ausgelegt ist, zwischen einer offenen Position, in der ein Lumen des Kanals (2) nicht blockiert ist, einer teilweise geschlossenen Position, in der das Lumen des Kanals (2) teilweise blockiert ist, und einer zweiten teilweise geschlossenen Position, in der das Lumen des Kanals (2) weiter teilweise blockiert ist, zu wechseln, derart, dass die Bewegung zwischen der offenen Position und der ersten teilweise geschlossenen Position und die Bewegung zwischen der ersten teilweise geschlossenen Position und der zweiten teilweise geschlossenen Position zum Veranlassen einer plötzlichen Verringerung oder Erhöhung des Drucks des zu testenden Axialgebläses (100) im Wesentlichen sofort erfolgen.

2. Teststation (1) nach Anspruch 1, wobei die Bewegung des Ventils (5) zwischen der offenen Position und der ersten teilweise geschlossenen Position und zwischen der ersten teilweise geschlossenen Position und der zweiten teilweise geschlossenen Position in weniger als 0,5 Sekunden erfolgt.

3. Teststation (1) nach Anspruch 1, wobei die Bewegung des Ventils (5) zwischen der offenen Position und der ersten teilweise geschlossenen Position und zwischen der ersten teilweise geschlossenen Position und der zweiten teilweise geschlossenen Position in weniger als 0,2 Sekunden erfolgt.

4. Teststation (1) nach Anspruch 1, wobei die Bewegung des Ventils (5) zwischen der offenen Position und der ersten teilweise geschlossenen Position und zwischen der ersten teilweise geschlossenen Position und der zweiten teilweise geschlossenen Position innerhalb von 0,05 bis 0,15 Sekunden erfolgt.

5. Teststation (1) nach einem der vorhergehenden Ansprüche, wobei das Ventil (5) ein Absperrventil ist, das zwei mechanisch synchronisierte Gleitschieber (51) umfasst, die in einer Ebene senkrecht zur Längsachse des Kanals (2) enthalten sind, wobei die Schieber (51) dazu ausgelegt sind, zwischen der offenen Position, in der sich die Schieber (51) vollständig außerhalb des Lumens des Kanals (2) befinden, der ersten teilweise geschlossenen Position, in der die Schieber (51) das Lumen des Kanals (2) teilweise blockieren, und der zweiten teilweise geschlossenen Position, in der die Schieber (51) weiter teilweise das Lumen des Kanals (2) teilweise blockieren, horizontal zu gleiten.

6. Teststation nach Anspruch 5, wobei die Schieber (51) an einem Seil (52) befestigt sind, das von Führungsrollen (53, 54, 55) zu einer Betätigungsrolle (56) geführt wird, die mechanisch an einer Welle eines Getriebemotors (57) befestigt ist, derart, dass eine Betätigung des Getriebemotors (57) die Schieber (51) veranlasst, sich zwischen der offenen Position und den teilweise geschlossenen Positionen zu bewegen.

7. Teststation (1) nach Anspruch 6, wobei das Seil (52) von einer Endführungsrolle (53) zu einem Paar von Richtungswechselführungsrollen (54) horizontal über den Schiebern (51) und dann auf einer Seite der Schieber (51) von den zwei Richtungswechselrollen (54) zu jeweiligen Seiten der Betätigungsrolle (56) vertikal nach unten verläuft.

8. Teststation (1) nach einem der vorhergehenden Ansprüche, wobei das Ventil (5) zum Detektieren, ob sich die Schieber (51) in der offenen Position, in der ersten teilweise geschlossenen Position oder in der zweiten teilweise geschlossenen Position befinden, ferner Positionsdetektoren umfasst.

9. Teststation (1) nach einem der vorhergehenden Ansprüche, wobei der Dämpfer (3) eine Vielzahl von rotierenden Lamellen umfasst, die dazu ausgelegt sind, sich zwischen einer offenen Position, in der die Lamellen parallel zur Längsachse des Kanals (2) verlaufen, und einer geschlossenen Position, in der die Lamellen senkrecht zur Längsachse des Kanals (2) verlaufen, zu einer beliebigen Zwischenposition zu bewegen.

10. Teststation (1) nach einem der vorhergehenden Ansprüche, die ferner eine Führungsrippen (6) umfasst, die im Mittenabschnitt (2b) des Kanals (2) bereitgestellt sind, wobei die Führungsrippen (6) parallel zur Längsachse des Kanals (2) verlaufen, um den Luftstrom axial zu führen.

11. Verfahren zum Testen eines Gebläses (100) unter Verwendung der Teststation nach einem der vorhergehenden Ansprüche, **dadurch gekennzeichnet, dass** es die folgenden Schritte umfasst:
wenn sich das Ventil (5) und der Dämpfer (3) in der offenen Position befinden, Starten des zu testenden Gebläses (100) mit der Nenndrehzahl und dann teilweises Schließen des Dämpfers (3), um das zu testende Gebläse (100) zu einem Nennbetriebspunkt zu bringen;
- Veranlassen des Ventils (5), sich von der offenen Position im Wesentlichen sofort zur ersten teilweise geschlossenen Position zu bewegen, in der der Druck am zu testenden Gebläse (100) ein erster Druck ist, wobei der erste Druck höher ist als ein Nenndruck des Gebläses (100);
- Veranlassen des Ventils (5), sich von der ersten teilweise geschlossenen Position allmählich zur zweiten teilweise geschlossenen Position zu bewegen, in der der Druck am zu testenden Gebläse (100) ein zweiter Druck ist, wobei der zweite Druck höher ist als der erste Druck;
- Veranlassen des Ventils (5), sich von der zweiten teilweise geschlossenen Position im Wesentlichen sofort zurück zur ersten teilweise geschlossenen Position zu bewegen, in der der Druck am zu testenden Axialgebläse (100) ungefähr dem ersten Druck gleicht;
- Halten des Ventils (5) in der ersten teilweise geschlossenen Position über eine Verzögerungszeitperiode, derart, dass der Druck am zu testenden Axialgebläse (100) ungefähr beim ersten Druck verbleibt;
- Veranlassen des Ventils (5), sich von der ersten teilweise geschlossenen Position im Wesentlichen sofort zur offenen Position zu bewegen, in der der Druck am zu testenden Gebläse (100) ungefähr dem Nenndruck gleicht;
- Veranlassen des Hilfsgebläses (4), aus dem vollständigen Stillstand allmählich auf die vorbestimmte Drehzahl zu beschleunigen, wobei der Druck am zu testenden Gebläse (100) ein dritter Druck ist, wobei der dritte Druck unter dem Nenndruck liegt; und
- Veranlassen des Hilfsgebläses (4), im Wesentlichen sofort zu stoppen, derart, dass der Druck am zu testenden Gebläse (100) erneut ungefähr den Nenndruck erreicht.

12. Verfahren zum Testen eines Gebläses (100) nach Anspruch 11, wobei die Schritte des Bewegens des Ventils (5) von der offenen Position zur ersten teilweise geschlossenen Position, von der zweiten teilweise geschlossenen Position zur ersten teilweise geschlossene Position und von der ersten teilweise geschlossenen Position zur offenen Position sowie der Schritt des Stoppens des Hilfsgebläses (4) in weniger als 0,5 Sekunden erfolgen.

13. Verfahren zum Testen eines Gebläses (100) nach Anspruch 12, wobei die Schritte des Bewegens des Ventils (5) von der offenen Position zur ersten teilweise geschlossenen Position, von der zweiten teilweise geschlossenen Position zur ersten teilweise geschlossene Position und von der ersten teilweise geschlossenen Position zur offenen Position sowie der Schritt des Stoppens des Hilfsgebläses (4) in weniger als 0,2 Sekunden erfolgen.

14. Verfahren zum Testen eines Gebläses (100) nach Anspruch 13, wobei die Schritte des Bewegens des Ventils (5) von der offenen Position zur ersten teilweise geschlossenen Position, von der zweiten teilweise geschlossenen Position zur ersten teilweise geschlossenen Position und von der ersten teilweise geschlossenen Position zur offenen Position sowie der Schritt des Stoppens des Hilfsgebläses (4) innerhalb von 0,05 bis 0,15 Sekunden erfolgen.

## Revendications

1. Station de test (1) pour un ventilateur (100), comprenant :
- un conduit (2) ayant un axe longitudinal, le conduit (2) comprenant une partie d'entrée d'air (2a), une partie de sortie d'air (2c) et une partie médiane (2b) entre la partie d'entrée d'air (2a) et la partie de sortie d'air (2c) ; et
- un amortisseur (3) prévu à l'extrémité d'entrée de la partie d'entrée d'air (2a) du conduit (2), l'amortisseur (3) bloquant sélectivement l'entrée du conduit (2) pour augmenter ou diminuer la résistance à un flux d'air à travers ledit conduit (2) ;
dans laquelle la partie de sortie d'air (2c) du conduit (2) est configurée pour le raccordement du ventilateur (100) à tester,
la station de test comprenant en outre :
- un ventilateur auxiliaire (4) prévu au niveau de la partie d'entrée d'air (2a) du conduit (2) en aval de l'amortisseur (3), le ventilateur auxiliaire (4) étant commandé par un variateur de fréquence (VFD) régénératif dont la puissance nominale est au moins 20 % supérieure à la puissance nominale du ventilateur auxiliaire (4), de telle sorte que le ventilateur auxiliaire (4) puisse fonctionner pour s'arrêter essentiellement instantanément depuis une vitesse prédéterminée jusqu'à l'arrêt complet ; et
- une vanne (5) prévue au niveau de la partie médiane (2b) du conduit (2) entre le ventilateur auxiliaire (4) et le ventilateur (100) à tester, la vanne (5) étant configurée pour alterner entre une position ouverte dans laquelle une lumière du conduit (2) n'est pas bloquée, une première position partiellement fermée dans laquelle la lumière du conduit (2) est partiellement bloquée, et une seconde position partiellement fermée dans laquelle la lumière du conduit (2) est davantage partiellement bloquée, de sorte que le mouvement entre la position ouverte et la première position partiellement fermée et le mouvement entre la première position partiellement fermée et la seconde position partiellement fermée se produisent essentiellement instantanément pour provoquer une diminution ou une augmentation soudaine de la pression au niveau du ventilateur axial (100) à tester.

2. Station de test (1) selon la revendication 1, dans laquelle le mouvement de la vanne (5) entre la position ouverte et la première position partiellement fermée et entre la première position partiellement fermée et la seconde position partiellement fermée s'effectue en moins de 0,5 seconde.

3. Station de test (1) selon la revendication 1, dans laquelle le mouvement de la vanne (5) entre la position ouverte et la première position partiellement fermée et entre la première position partiellement fermée et la seconde position partiellement fermée s'effectue en moins de 0,2 seconde.

4. Station de test (1) selon la revendication 1, dans laquelle le mouvement de la vanne (5) entre la position ouverte et la première position partiellement fermée et entre la première position partiellement fermée et la seconde position partiellement fermée s'effectue entre 0,05 et 0,15 seconde.

5. Station de test (1) selon l'une quelconque des revendications précédentes, dans laquelle la vanne (5) est un robinet-vanne comprenant deux opercules (51) coulissantes synchronisées mécaniquement contenues dans un plan perpendiculaire à l'axe longitudinal du conduit (2), les opercules (51) étant configurées pour coulisser horizontalement entre la position ouverte dans laquelle les opercules (51) sont complètement à l'extérieur de la lumière du conduit (2), la première position partiellement fermée dans laquelle les opercules (51) bloquent partiellement la lumière du conduit (2), et la seconde position partiellement fermée dans laquelle les opercules (51) bloquent davantage partiellement la lumière du conduit (2).

6. Station de test selon la revendication 5, dans laquelle lesdites opercules (51) sont fixées à un câble (52) guidé par des poulies de guidage (53, 54, 55) jusqu'à une poulie d'actionnement (56) fixée mécaniquement à un arbre d'un motoréducteur (57), de telle sorte que l'actionnement du motoréducteur (57) provoque le mouvement des opercules (51) entre la position ouverte et les positions partiellement fermées.

7. Station de test (1) selon la revendication 6, dans laquelle le câble (52) s'étend horizontalement au-dessus des opercules (51) depuis une poulie de guidage d'extrémité (53) jusqu'à une paire de poulies de guidage de changement de direction (54), puis verticalement vers le bas sur un côté des opercules (51) à partir des deux poulies de changement de direction (54) jusqu'aux côtés respectifs de la poulie d'actionnement (56).

8. Station de test (1) selon l'une quelconque des revendications précédentes, dans laquelle la vanne (5) comprend en outre des détecteurs de position pour détecter si les opercules (51) sont dans la position ouverte, dans la première position partiellement fermée, ou dans la seconde position partiellement fermée.

9. Station de test (1) selon l'une quelconque des revendications précédentes, dans laquelle l'amortisseur (3) comprend une pluralité de lames rotatives configurées pour se mouvoir dans n'importe quelle position intermédiaire entre une position ouverte où lesdites lames sont parallèles à l'axe longitudinal du conduit (2) et une position fermée où lesdites lames sont perpendiculaires à l'axe longitudinal du conduit (2).

10. Station de test (1) selon l'une quelconque des revendications précédentes, comprenant en outre des ailettes de guidage (6) prévues au niveau de la partie médiane (2b) du conduit (2), les ailettes de guidage (6) étant parallèles à l'axe longitudinal du conduit (2) pour guider axialement le flux d'air.

11. Procédé pour tester un ventilateur (100) utilisant la station de test selon l'une quelconque des revendications précédentes, **caractérisé en ce qu'**il comprend les étapes suivantes :
- avec la vanne (5) et l'amortisseur (3) en position ouverte, démarrer le ventilateur (100) à tester à la vitesse nominale puis fermer partiellement l'amortisseur (3) pour amener le ventilateur (100) à tester à un point de fonctionnement nominal ;
- amener la vanne (5) à se mouvoir essentiellement instantanément de la position ouverte à la première position partiellement fermée dans laquelle la pression au niveau du ventilateur (100) à tester est une première pression, où la première pression est supérieure à une pression nominale du ventilateur (100) ;
- amener la vanne (5) à se mouvoir progressivement de la première position partiellement fermée à la seconde position partiellement fermée dans laquelle la pression au niveau du ventilateur (100) à tester est une deuxième pression, où la deuxième pression est supérieure à la première pression ;
- amener la vanne (5) à se mouvoir essentiellement instantanément de la seconde position partiellement fermée à la première position partiellement fermée dans laquelle la pression au niveau du ventilateur axial (100) à tester est approximativement la première pression ;
- maintenir la vanne (5) dans la première position partiellement fermée pendant une période de temps différée de telle sorte que la pression au niveau du ventilateur axial (100) à tester reste approximativement à la première pression ;
- amener la vanne (5) à se mouvoir essentiellement instantanément de la première position partiellement fermée à la position ouverte dans laquelle la pression au niveau du ventilateur (100) à tester est approximativement la pression nominale ;
- amener le ventilateur auxiliaire (4) à accélérer progressivement depuis l'arrêt complet jusqu'à la vitesse prédéterminée dans laquelle la pression au niveau du ventilateur (100) à tester est une troisième pression, où la troisième pression est inférieure à la pression nominale ; et
- amener le ventilateur auxiliaire (4) à s'arrêter essentiellement instantanément, de telle sorte que la pression au niveau du ventilateur (100) à tester atteigne à nouveau approximativement la pression nominale.

12. Procédé pour tester un ventilateur (100) selon la revendication 11, dans lequel les étapes consistant à mouvoir la vanne (5) de la position ouverte à la première position partiellement fermée, de la seconde position partiellement fermée à la première position partiellement fermée, et de la première position partiellement fermée à la position ouverte, et l'étape d'arrêt du ventilateur auxiliaire (4), s'effectuent en moins de 0,5 seconde.

13. Procédé pour tester un ventilateur (100) selon la revendication 12, dans lequel les étapes consistant à mouvoir la vanne (5) de la position ouverte à la première position partiellement fermée, de la seconde position partiellement fermée à la première position partiellement fermée, et de la première position partiellement fermée à la position ouverte, et l'étape d'arrêt du ventilateur auxiliaire (4), s'effectuent en moins de 0,2 seconde.

14. Procédé pour tester un ventilateur (100) selon la revendication 13, dans lequel les étapes consistant à mouvoir la vanne (5) de la position ouverte à la première position partiellement fermée, de la seconde position partiellement fermée à la première position partiellement fermée, et de la première position partiellement fermée à la position ouverte, et l'étape d'arrêt du ventilateur auxiliaire (4), s'effectuent entre 0,05 et 0,15 seconde.
